# EUROPEAN PATENT SPECIFICATION

(11) **EP 3 136 760 B1**
(45) Date of publication and mention of the grant of the patent: **17.02.2021**
(21) Application number: 15182714.4
(22) Date of filing: 27.08.2015
(51) Int. Cl.: H04W 8/08, H04L 29/06, H04W 84/12

(54) **METHOD FOR ESTABLISHING A VOICE COMMUNICATION**
VERFAHREN ZUR HERSTELLUNG EINER SPRACHKOMMUNIKATION
PROCÉDÉ POUR ÉTABLIR UNE COMMUNICATION VOCALE

(43) Date of publication of application: 01.03.2017
(73) Proprietor: Vodafone GmbH, 40549 Düsseldorf (DE)
(72) Inventor: NIKS, David, 6295 AH Lemiers (NL); BINDRIM, Walter, 45721 Haltern am See (DE); FERNANDES, António Carlos Correia, 40489 Düsseldorf (DE)
(74) Representative: Patentanwälte Bals & Vogel

(56) References cited:
- EP-A1- 2 009 887
- US-A1- 2010 128 677
- US-A1- 2012 269 162

## Description

The present invention is related to a method for establishing a voice communication between a mobile entity and a receiving entity within the same enterprise network as well as a computer program product carrying out an inventive method.

It is in general known that it is possible to establish voice communication between mobile entities and receiving entities. A special situation of such a communication takes place when the mobile entity as well as the receiving entity are being part of one and the same enterprise network and the mobile device is enabled for Voice over WiFi (VoWiFi) using a non-3GPP wireless access point (WiFi) of the Enterprise. Further the Enterprise PBX is connected via e.g. PBX trunking with the mobile operator domain. An enterprise network in the meaning of the present invention can for example be the network of an enterprise within a building, within an area or even across different cities or countries. But also, logical and technical related network parts can form a single enterprise network within that meaning. According to general known methods, if a mobile entity is located within the enterprise network, it starts the establishment via a non-3GPP wireless access point (WiFi) of a voice communication by sending a communication request. The communication request will be sent over to the Evolved Packet Core network of the mobile network provider in a secure tunnel, which is responsible for offering all mobility functionalities for this user. In that case, the communication request can for example be sent forward via a respective interface and/or via an internet communication to the receiving entity. Based on that communication request a media session is established on which basis now the voice communication can take place.

Aforesaid solution leads to the situation that the bandwidth is used twice in that case. In particular, the data for the voice communication is sent from the mobile entity via the non-3GPP wireless access point (WiFi) up to the mobile network via the Evolved Packet Core (EPC) / Tunnel network. Within the mobile network, the voice communication and the respective data is forwarded downwards to receiving entity in the enterprise network in particular via a separate interface (not part of the EPC / Tunnel). Within that enterprise network now, the receiving entity, for example an IP telephone, is reached by the voice data. As it can be derived from that description the voice data is sent via interfaces between the enterprise network and the core network two times. One time is the media session from the UE via the non-3GPP wireless access point (WiFi) of the mobile voice data via the EPC / Tunnel and the second time is the media session for the receiving entity. This behavior will also increase jitter and delay which creates also low QoS.

US 2010/128677 A1 discloses a method of facilitating circuit-switched (CS) media breakout at a femto AP by a routing component of the AP. Upon initiation of a call by a UE, e.g., a voice call, the routing component can determine an optimal path to route the call, i.e., whether to route it through the core network or deploy breakout at the AP. Furthermore, the routing component at the AP can transmit data indicating CS breakout support to the core network.

It is an object of the present invention to overcome aforesaid disadvantages. In particular, it is an object of the present invention to provide an easy and cost-efficient solution to avoid aforesaid problem, which is in particular discussed as so-called tromboning.

Aforesaid object is achieved by a method according to independent claim 1 as wells as a computer program product according to independent claim 7 of the present application. Further features and details of the invention result from the dependent claims.

According to an aspect, a method is provided to establish a voice communication between a mobile entity and a receiving entity within an enterprise network. Such a method comprises the following steps:
- sending a communication request from the mobile entity via the WiFi air interface to a WiFi access point,
- forwarding the communication request from the WiFi access point to a core network a voice path optimizer indicates to the core network the support for break-out in particular by including the field within the call setup message to the network.,
- establishing a signaling session between the core network and the enterprise network,
- breaking out the voice communication at the WiFi access point to a private exchange server of the enterprise network,
- connecting the voice communication from the private exchange server to the receiving entity.

According to the present invention the WiFi access point can be configured in different ways. For example, a WiFi access point can be a single access point or even a network of several access points. In particular, the WiFi access point according to the present invention could comprises a central WiFi controller, which is one single controller for all or at least some of the WiFi access points of the enterprise network. In such a situation, the intelligence for the break out as well as the point of the break out can be positioned within such a central controller, in the WiFi AP or in a connected router.

Of course also the contrary way is possible, namely the receiving entity, in this case also acting as a calling entity, calling actively the mobile entity. In that case, a method for establishing a voice communication between a mobile entity and a receiving entity within an enterprise network, comprises the following steps:
- Sending a communication request from the receiving entity to a core network,
- Establishing a signaling session between the core network and the enterprise network and the Mobile entity,
- Breaking out the voice communication at a WiFi access point to which the mobile entity is connected to a private exchange server of the enterprise network,
- Connecting the voice communication from the private exchange server to the mobile entity.

In particular some further steps can be used, namely the following:
- Sending a communication request from the receiving entity to a core network,
- Establishing a signaling session between the core network and the enterprise network,
- Breaking out the voice communication at e.g. a WiFi access point to which the mobile entity is connected to a private exchange server of the enterprise network,
- Connecting the voice communication from the private exchange server to the mobile entity.

Within this application the use of voice is used as a synonym for media communication. It is also possible to connect a mobile entity to another mobile entity with an inventive method. In such a case, a method for establishing a voice communication between a mobile entity and another mobile entity within an enterprise network, comprises the following steps:
- Sending a communication request from the origin mobile entity to a core network,
- Forwarding the communication request from the WiFi access point to a core network, a voice path optimizer indicates to the network the support for break-out in particular by including the (BM) field within the call setup message to the network.
- Establishing a signaling session between the core network and the enterprise network and the Mobile entity,
- Breaking out the voice communication at a WiFi access points to which the mobile entities are connected to a private exchange server of the enterprise network,
- Connecting the voice communication from the private exchange server to the mobile entity.

According to an aspect, the method starts very similar to already known methods. In particular, a communication request is sent from the mobile entity via a WiFi access network to the mobile packet core. A WiFi access point can be part of the enterprise network and therefore can form an internal interface to enter the enterprise network. A mobile entity is now able to communicate via that WiFi access point with the mobile packet core and therefore is able to provide the WiFi access point with a respective communication request. The main contents of such a communication request are an address of the receiving entity as well as the information that a voice communication is planned to be established. The WiFi access point can now pass on that communication request further to the provider of the enterprise network, namely the core network of that provider. Up to this situation only signaling data is exchanged namely the information of an upcoming establishment of a voice communication. Within the core network, it is now possible to gather that information about the communication request and in particular about the receiving entity as well as the mobile entity. To do so a signaling session is established between the core network and the enterprise network. Such a signaling session is in particular kept alive until the specific voice communication has come to an end. The signaling session keeps the core network updated about the present situation of the call, namely the voice communication and hence allows the core network to provide all mobility management functionalities and potential other applications assigned to the user. In other words the user will not lose any functionalities when using the WiFi access point inside the Enterprise network with this invention.

In difference to already known methods, it is now possible that a local enterprise breakout is carried out. Within the enterprise WiFi access point the voice communication is cut off the signaling communication, namely the communication request, and is now past on directly within the enterprise network to a private exchange server. This breakout of the route to the core network for the voice communication can be carried out based on different information. For example, it is possible that the enterprise WiFi access point, as it is discussed in more detail later on, is in possession of information of the location of itself as well as of the mobile entity and the receiving entity. It is also possible that a respective feedback can be sent from the core network down to the WiFi access point to provide the WiFi access point with the possibility of such a breakout for the voice communication.

Independently from the information for the possibility of the breakout, the breakout itself leads to less complex situation for the voice communication. As it can be seen in particular in the figures which are discussed in more detail later on the main data volume, namely the full voice communication, is now past by the core network and is past on directly and only within the enterprise network. Therefore, less bandwidth is necessary to keep up the signaling session between the enterprise network and the core network. The main bandwidth for the voice communication is only needed once within the enterprise network and therefore the bandwidth outbound to the core network is not used for the main data volume of the voice communication.

Due to the fact that the breakout of the voice communication to an internal Private Branch exchange (PBX) server and a respective forwarding of the voice communication to the receiving entity is carried out only within the enterprise network a significant increase in quality can be watched during that voice communication. Usually the internal bandwidth is in particular due to the usage of fixed lines within a building of an enterprise very high. Quality of service is therefore also very high for such a respective voice communication. Any problems as delay, jitter or breaking off the call as well as lacking of packets during transfer of the voice communication data can be avoided significantly, in particular fully.

Not only the general reduction of the use of bandwidth in the Enterprise and core network is one high advantage. Even further, the flexibility of the caller as well as the receiver is increased by an inventive method. For example, it is possible that due to the fact that the signaling session is kept alive for the duration of the voice communication, the mobile entity can be moved further on to a separate second WiFi access point or perform handover to a 3GPP access network. A respective handover can take place between the WiFi access point without touching the breakout situation within the enterprise network and without touching the signaling session, which is still kept alive between the core network and the enterprise network. Also further handovers are possible, for example to a mobile network like an LTE-network in particular. Last but not least, also transfer functionalities of the core, for example, internal transfers or conference calls can be carried out and handled by an inventive method with the same flexibility and the same advantages.

The voice communication is ended by a so-called "bye" message or end message, which is in particular sent from the receiving entity or the mobile entity. That end message forces the WiFi access point to stop the breakout route within the enterprise network as well as the signaling session to be disestablished.

It is possible according to the present invention that the method is characterized in that the core network carries out a comparison if the mobile entity and the receiving entity are located within the same enterprise network, wherein the core network in particular sends a breakout message back to the WiFi access point in the case of a positive comparison. The inventive method can be used beside the technical needs of the respective components only in the case that the mobile entity and the receiving entity are located within the same enterprise network. To ensure that the method is able to be carried out in 100 % of the cases, a comparison step can be used according to this embodiment. For example, this comparison step can be carried out within the core network such that now the core network and therefore the network provider of the enterprise network is able to control the full functionality and avoid misleading of calls from a mobile entity and/or a receiving entity which are not located within the same enterprise network. In particular, a respective feedback can be used in the form of a breakout message to inform the WiFi access point of the general possibility of the breakout situation. This leads to a reduction of the need of information within the WiFi access point due to the fact that the respective comparison step and the respective feedback information are now provided and located within the core network.

It is further possible that according to the present invention the method is characterized in that the signaling session is established between the WiFi access point and the core network as well as between an enterprise router of the enterprise network and the core network. In other words, now two different interfaces are provided by the enterprise network, namely the WiFi access point as well as the enterprise router. The signaling session is now provided by both of that interfaces and therefore the signaling session is spread over both of that two connections. This leads in particular to the possibility to offer a trunking functionality, which is discussed in more detail in the following paragraph.

According to the embodiment above it is also possible that according to the present invention the method is characterized in that the signaling session is established between the enterprise router (PBX) and a core exchange server of the core network offering a trunking functionality. This leads to a further flexibility due to further information within the core network. The core network of the mobile operator is now able to provide a respective handling or management of the bandwidth within the enterprise network. Such a trunking functionality which can for example be carried out for handling bandwidth and/or ports of the enterprise network can increase flexibility as well as the bandwidth management as to an optimized way within the inventive method.

It is further possible that, according to an example, the method is characterized in that the WiFi access point and/or the mobile entity adds a session information to the communication request. Such a session information can in particular comprise one or two of the following information. A first information can be focused on the technical possibility, which is given by the WiFi access point. Such a technical possibility can comprise the component function that a breakout is possible from the technical point of view. Only a WiFi access point, which offers the technical possibility of a breakout, can be used for the inventive method. Such an information is therefore in particular of advantage if a respective breakout is managed by the enterprise network and/or the core network. It is also possible that such a session information comprises a location information about the WiFi access point and/or the mobile entity. Also a customer information of the mobile entity namely if he is part of the respective enterprise network or not can be used as a so-called session information. Based on that session information which is an adaption of the communication request, a respective comparison step can be carried out more flexible and more easily later on within the core network. Such a session information can also be called a voice path optimizer (VPO) which is located within the mobile entity and/or in the WiFi access point, Wireless LAN Controller or connected router. It is preferred to locate that functionality within the WiFi access point, Wireless LAN Controller or connected router or even within the core network to avoid changes on the mobile entity. However, in the case that also the situation of untrusted connections has to be carried out within an inventive method a so-called IPsec tunnel will be established between the mobile entity and the core network. Due to the fact that from the outside no information can be gathered from the inside of that IPsec tunnel, a respective location of the session information within the mobile entity can overcome that disadvantage in the untrusted communication situation.

It is also a possibility that, according to an example, the method is characterized in that in the WiFi access point and/or the core network an optimization of the part of the voice communication is carried out. For example, the negotiation of the voice communication data, which can also be called the RTP data, can be carried out. A respective black list or a white list can be used within the WiFi access point or within the core network to carry out such optimization. In particular, as to the rooting within the enterprise network as for and also for the breakout routing a respective optimization can be achieved by that embodiment.

It is further a possibility that, according to an example, the method is characterized in that the receiving entity is configured to be an IP-communication entity within the enterprise network. In particular, it is an IP-communication entity with a fixed line and therefore with a fixed location for the receiving entity. This leads to a much more easier communication due to the fact that the receiving entity is 100 % within the enterprise network. For example, the IP-communication entity can comprise a fixed line being a desk telephone or something alike.

A further possibility is achieved by a method according to an example being characterized in that the receiving entity is configured to be a mobile receiving entity being connected to a receiving WiFi access point within the enterprise network. This is an alternative, which can also be handled by an inventive method. In particular, mobile-to-mobile communication within the enterprise network can now make use of the same advantages, which have been discussed in detail with respect to the aforesaid embodiments.

It is a further aspect to provide a computer program product being stored on a computer readable medium establishing a voice communication between a mobile entity and a receiving entity within an enterprise network, comprising the following:
- computer readable program means, initiating the computer to send a communication request from the mobile entity to a WiFi access point,
- computer readable program means, initiating the computer to forward the communication request from the WiFi access point to a core network,
- computer readable program means, initiating the computer to establish a signaling session between the core network and the enterprise network,
- computer readable program means, initiating the computer to break out the voice communication at the WiFi access point to a private exchange server of the enterprise network,
- computer readable program means, initiating the computer to connect the voice communication from the private exchange server to the receiving entity.

An inventive computer program product comprises in particular a computer readable program means, initiating the computer to carry out the steps of an inventive method. Therefore, the inventive computer program product brings up the same advantages, which have been discussed in detail with respect to the inventive method.

The present invention is discussed in more detail with respect to the accompanying drawings, which show schematically:
- Fig. 1: a first step of an inventive method,
- Fig. 2: a second step of an inventive method,
- Fig. 3: an alternative step of an inventive method.

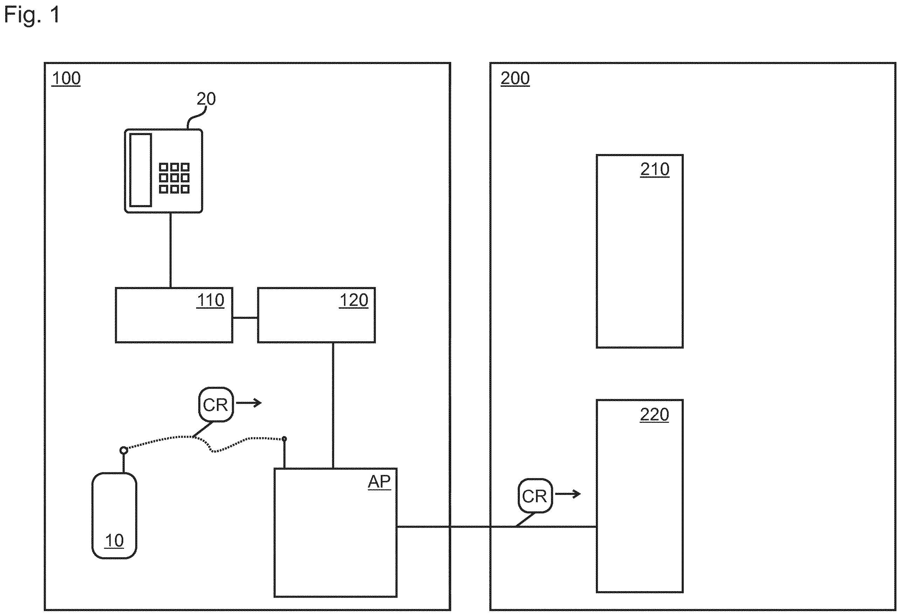

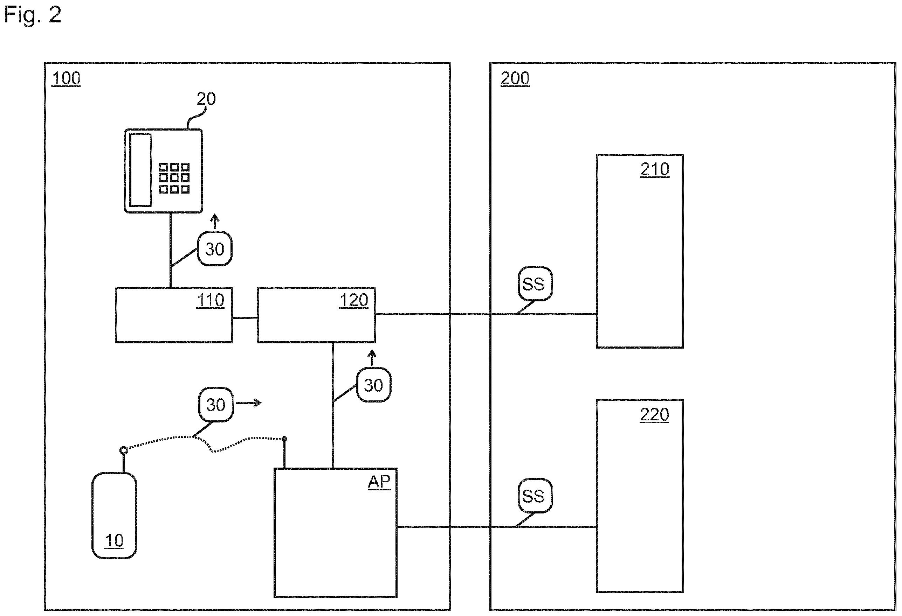

Based on the inventive method Fig. 1 shows the general situation and relation between a core network 200 as well as an enterprise network 100. The enterprise network 100 can for example be located in one building and being offered by fixed fiber lines as well as respective WiFi access points AP. In a specific calling situation, a mobile entity 10 wants to establish a voice communication 30 to a respective receiving entity 20. In this case, the mobile entity 10 is a mobile cell phone being connected to a WiFi access point AP and the receiving entity 20 is a fixed IP cell phone. To carry out the voice communication 30 a first step according to fig. 1 a communication request CR is now sent from the mobile entity 10 to the WiFi access point AP. The WiFi access point AP forwards that communication request CR further on to the core network 200, in particular, to a core gateway 220. Now, a comparison step can be carried out which results in the fact that the mobile entity 10 and the receiving entity 20 in this case are located within the same enterprise network 100. In a next step according to fig. 2, now, a signaling session SS is established between the core network 200 and the enterprise network 100. In this specific situation the signaling session SS is provided between the VPO either location on the AP (trusted) or mobile entity (untrusted) and the core network 200 as well as between an enterprise router 120 forming a second interface to the core network 200 and within there a core exchange server 210. The core exchange server 210 can for example provide so-called trunking functionality.

As it can also be derived from fig. 2 after establishing the signaling session SS, a breakout functionality can be provided by the WiFi access point AP. The voice communication 30 is now broken out directly at the WiFi access point AP without leaving the enterprise network 100. To get to the receiving entity 20, now the voice communication 30 is passed on within the enterprise network 100 and rerouted by a respective private exchange server 110.

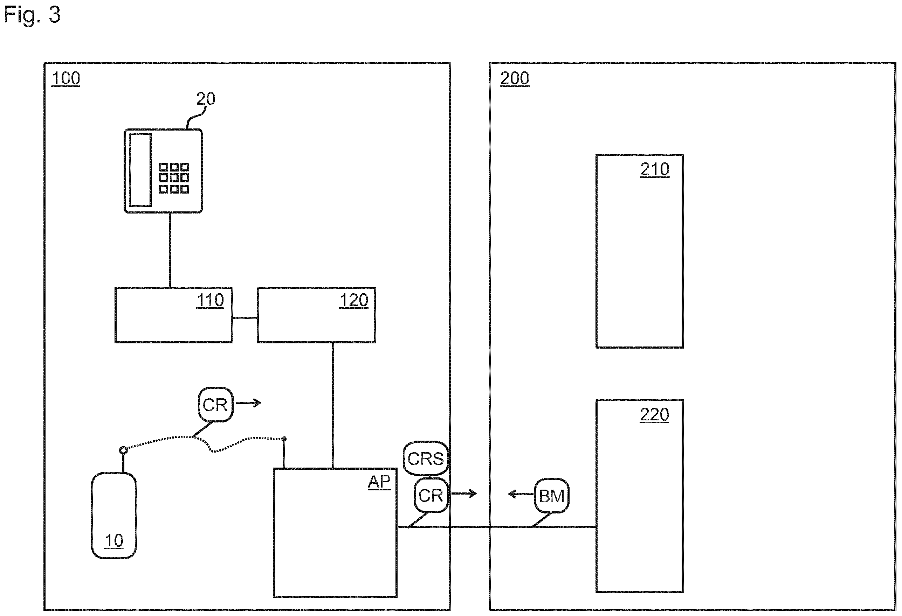

To carry out an inventive method according to fig. 3 it can be an alternative to add additional information within the WiFi access point AP. Such an additional information can for example be session information CRS which is focused on the technical possibility of a breakout of the WiFi access point AP and/or the location of the WiFi access point AP as well as the mobile entity 10. A further embodiment of the present invention according to fig. 3 now comprises a feedback coming from the core network 200, in particular the core gateway 220, which is configured to be a breakout message BM. This breakout message BM now forces the WiFi access point AP to carry out the breakout situation, which has been discussed in detail with respect to fig. 2.

In case the mobile entity wants to establish an IPSec tunnel towards the mobile network the breakout message BM will be send to the VPO located at the mobile entity. In that case the mobile entity will only use the IPSec tunnel for the signaling session while the voice communincation will be routed outside of the IPSec tunnel. Of course, aforesaid description of the accompanying drawings is only by the way of detail and example. Specific features of each aspect of the present invention are defined in the appended claims.

### REFERENCE SIGNS

- 10: mobile entity
- 20: receiving entity
- 30: voice communication

- 100: enterprise network
- 110: private automatic branch exchange (PABX)
- 120: enterprise router
- 200: core network (consists of EPC, IMS and Application Servers)
- 210: core exchange server
- 220: core gateway

- CR: communication request
- CRS: session information
- BM: breakout message
- SS: signaling session
- AP: WiFi access point
- VPO: voice path optimizer

## Claims

1. Method for establishing a voice communication (30) between a mobile entity (10) and a receiving entity (20) within an enterprise network (100), comprising the following steps:
- Sending a communication request, CR, by the mobile entity (10) to a WiFi access point, AP,
- Forwarding the communication request, CR, from the WiFi access point , AP, to a core network (200), a voice path optimizer, VPO, which represents session information and is located within the mobile entity (10) and/or the WiFi access point, AP, indicates to the core network (200) the support for break-out,
- Establishing a signaling session, SS, between the core network (200) and the enterprise network (100) and the Mobile entity (10), wherein the signaling session, SS, is established between the WiFi access point, AP, and the core network (200) as well as between an enterprise router (120) of the enterprise network (100) and the core network (200),
- Breaking out the voice communication (30) at the WiFi access point AP, to a private exchange server (110) of the enterprise network (100), wherein the signaling session is kept alive until the specific voice communication has come to an end and keeps the core network updated about the present situation of the voice communication,
- Connecting the voice communication (30) from the private exchange server (110) to the receiving entity (20),
**characterized in that** it further comprises the following steps: upon receiving the CR forwarded by the AP, carrying out, by the core network (200) a comparison if the mobile entity (10) and the receiving entity (20) are located within the same enterprise network (200), and sending by the core network (100) a breakout message, BM, back to the WiFi access point AP, or the mobile entity in the case of a positive comparison.

2. Method according to claim 2, wherein the signaling session is established between the enterprise router (120) and a core exchange server (210) of the core network (200) offering a trunking functionality.

3. Method according to any of the preceding claims, wherein the WiFi access point (AP) and/or the mobile entity (10) adds a session information (CRS) to the communication request (CR).

4. Method according to any of the preceding claims, wherein in the WiFi access point (AP) and/or the core network (200) an optimization of the path of the voice communication (30) is carried out.

5. Method according to any of the preceding claims, wherein the receiving entity (20) is configured to be voice communication entity within the enterprise network (100).

6. Method according to any of the preceding claims, wherein the receiving entity (20) is configured to be a mobile receiving entity being connected to a receiving WiFi access point (AP) within the enterprise network (100).

7. Computer program product comprising computer readable program means configured to initiate the computer to carry out all the steps of a method according to any of claims 1 to 6.

## Patentansprüche

1. Verfahren zum Aufbau einer Sprachkommunikation (30) zwischen einer mobilen Einheit (10) und einer Empfangseinheit (20) innerhalb eines Firmennetzwerks (100), umfassend die folgenden Schritte:
- Senden einer Kommunikationsanfrage, CR, durch die mobile Einheit (10) an einen WiFi-Zugangspunkt, AP,
- Weiterleiten der Kommunikationsanfrage, CR, vom WiFi-Zugangspunkt, AP, an ein Kernnetzwerk (200), wobei ein Sprachpfad-Optimierer, VPO, der Sitzungsinformationen repräsentiert und innerhalb der mobilen Einheit (10) und/oder des WiFi-Zugangspunktes, AP, angeordnet ist, dem Kernnetzwerk (200) eine Unterstützung für einen Abbruch anzeigt,
- Aufbauen einer Signalisierungssitzung, SS, zwischen dem Kernnetzwerk (200) und dem Firmennetzwerk (100) und der mobilen Einheit (10), wobei die Signalisierungssitzung, SS, zwischen dem WIFI-Zugangspunkt, AP, und dem Kernnetzwerk (200) sowie zwischen einem Firmenrouter (120) des Firmennetzwerks (100) und dem Kernnetzwerk (200) aufgebaut wird,
- Abbrechen der Sprachkommunikation (30) am WiFi-Zugangspunkt, AP, zu einem privaten Vermittlungsserver (110) des Firmennetzwerks (100), wobei die Signalisierungssitzung aufrechterhalten wird, bis die spezifische Sprachkommunikation beendet ist und das Kernnetzwerk über die aktuelle Situation der Sprachkommunikation auf dem Laufenden hält,
- Verbinden der Sprachkommunikation (30) vom privaten Vermittlungsserver (110) mit der Empfangseinheit (20),
**dadurch gekennzeichnet, dass** das Verfahren ferner die folgenden Schritte umfasst: beim Empfang der vom AP weitergeleiteten CR, Durchführen eines Vergleichs durch das Kernnetzwerk (200), ob sich die mobile Einheit (10) und die Empfangseinheit (20) im selben Firmennetzwerk (200) befinden, und Senden einer Abbruch-Meldung, BM, durch das Kernnetzwerk (100) zurück an den WiFi-Zugangspunkt, AP, oder die mobile Einheit im Falle eines positiven Vergleichs.

2. Verfahren nach Anspruch 1, wobei die Signalisierungssitzung zwischen dem Firmenrouter (120) und einem Kernvermittlungsserver (210) des Kernnetzwerkes (200) aufgebaut wird, der eine Bündelfunktionalität bietet.

3. Verfahren gemäß einem der vorhergehenden Ansprüche, wobei der WiFi-Zugangspunkt (AP) und/oder die mobile Einheit (10) der Kommunikationsanfrage (CR) eine Sitzungsinformation (CRS) hinzufügt.

4. Verfahren gemäß einem der vorhergehenden Ansprüche, wobei im WiFi-Zugangspunkt (AP) und/oder im Kernnetzwerk (200) eine Optimierung des Pfades der Sprachkommunikation (30) durchgeführt wird.

5. Verfahren gemäß einem der vorhergehenden Ansprüche, wobei die Empfangseinheit (20) als Sprachkommunikationseinheit innerhalb des Firmennetzwerks (100) konfiguriert wird.

6. Verfahren gemäß einem der vorhergehenden Ansprüche, wobei die Empfangseinheit (20) so konfiguriert ist, dass sie eine mobile Empfangseinheit ist, die mit einem empfangenden WiFi-Zugangspunkt (AP) innerhalb des Firmennetzwerks (100) verbunden ist.

7. Computerprogrammprodukt umfassend computerlesbare Programmmittel, die so konfiguriert sind, dass sie den Computer veranlassen, alle Schritte eines Verfahrens nach einem der Ansprüche 1 bis 6 auszuführen.

## Revendications

1. Méthode pour établir une communication vocale (30) entre une entité mobile (10) et une entité réceptrice (20) au sein d'un réseau d'entreprise (100), comprenant les étapes suivantes :
- L'envoi d'une demande de communication, CR, par l'entité mobile (10) à un point d'accès WiFi, AP,
- La transmission de la demande de communication, CR, du point d'accès WiFi, AP, à un réseau central (200), un optimiseur de chemin vocal, VPO, qui représente les informations de session et est situé dans l'entité mobile (10) et/ou le point d'accès WiFi, AP, indique au réseau central (200) la prise en charge de la rupture,
- L'établissement d'une session de signalisation, SS, entre le réseau central (200) et le réseau d'entreprise (100) et l'entité mobile (10), dans lequel la session de signalisation, SS, est établie entre le point d'accès WIFI, AP, et le réseau central (200) ainsi qu'entre un routeur d'entreprise (120) du réseau d'entreprise (100) et le réseau central (200)
- La déconnexion de la communication vocale (30) au point d'accès WiFi, AP, vers un serveur d'échange privé (110) du réseau d'entreprise (100), où la session de signalisation est maintenue en vie jusqu'à ce que la communication vocale spécifique soit terminée et tient le réseau central informé de la situation actuelle de la communication vocale,
- La connexion de la communication vocale (30) du serveur d'échange privé (110) à l'entité réceptrice (20),
**caractérisé en ce que** la méthode comprend en outre les étapes suivantes :
à la réception du CR transmis par l'AP, effectuer, par le réseau central (200) une comparaison si l'entité mobile (10) et l'entité réceptrice (20) sont situées dans le même réseau d'entreprise (200), et envoyer par le réseau central (100) un message de rupture, BM, au point d'accès WiFi, AP, ou à l'entité mobile dans le cas d'une comparaison positive.

2. Méthode selon la revendication 1, dans laquelle la session de signalisation est établie entre le routeur d'entreprise (120) et un serveur central d'échange (210) du réseau central (200) offrant une fonctionnalité de jonction.

3. Méthode selon l'une des revendications précédentes, dans laquelle le point d'accès WiFi (AP) et/ou l'entité mobile (10) ajoute une information de session (CRS) à la demande de communication (CR).

4. Méthode selon l'une des revendications précédentes, dans laquelle dans le point d'accès WiFi (AP) et/ou le réseau central (200) une optimisation du chemin de la communication vocale (30) est effectuée.

5. Méthode selon l'une des revendications précédentes, dans laquelle l'entité réceptrice (20) est configurée pour être une entité de communication vocale au sein du réseau d'entreprise (100).

6. Méthode selon l'une des revendications précédentes, dans laquelle l'entité réceptrice (20) est configurée pour être une entité réceptrice mobile étant connectée à un point d'accès WiFi récepteur (AP) dans le réseau d'entreprise (100).

7. Produit de programme informatique comprenant des moyens de programme lisibles par ordinateur configurés pour initier l'ordinateur à exécuter toutes les étapes d'une méthode selon l'une des revendications 1 à 6.
